# EUROPEAN PATENT APPLICATION

(11) **EP 4 333 379 A1**
(43) Date of publication of application: **06.03.2024**
(21) Application number: 22810588.8
(22) Date of filing: 25.05.2022
(51) Int. Cl.: H04L 12/18

(54) **MESSAGE REMINDING METHOD AND APPARATUS, AND ELECTRONIC DEVICE**

(30) Priority: 27.05.2021 CN 202110587430
(71) Applicant: Vivo Mobile Communication Co., Ltd., Dongguan, Guangdong 523863 (CN)
(72) Inventor: LI, Fei, Dongguan, Guangdong 523863 (CN)
(74) Representative: Murgitroyd & Company
(86) International application number: PCT/CN2022/095014
(87) International publication number: WO 2022/247864

(57) **Abstract**

This application discloses a message reminding method and apparatus, and an electronic device, and pertains to the field of communication technologies. The method includes: receiving, through a first account, a target message, where the target message includes a target identifier; and in a case that the first account corresponds to a first contact, outputting a first prompt message. The target identifier is any one of the following: a contact identifier of a second contact and an identifier of a target sub-group; where the target sub-group includes the first contact, both the first contact and the second contact are contacts in a target group, and the first contact and the second contact have an association.

## Description

### CROSS-REFERENCE TO RELATED APPLICATION

This application claims priority to Chinese Patent Application No. 202110587430.8, filed in China on May 27, 2021, which is incorporated herein by reference in its entirety.

### TECHNICAL FIELD

The present invention relates to the field of communication device technologies, and in particular, to a message reminding method and apparatus, and an electronic device.

### BACKGROUND

Generally, social applications included in electronic devices provide users with a multi-person chat function (group chat function), which allows a plurality of users to correspond to one session interface. When any user among the plurality of users sends a message, all other users can view the message.

In some cases, a message sent by a user only needs to be viewed by specific users (other users do not need to pay attention to the message), so the user can @mention the specific users to prompt these specific users to view the message in a timely manner.

However, when prompting the specific users to view the message, it is necessary to @mention each of the specific users separately to remind these specific users to view the message. Therefore, the user's operation is cumbersome and time-consuming, resulting in a low efficiency of the electronic device in reminding users to view the message.

### SUMMARY

The purpose of embodiments of this application is to provide a message reminding method and apparatus, and an electronic device, which can solve the problem of low efficiency of the electronic device in reminding users to view messages.

According to a first aspect, an embodiment of this application provides a message reminding method, where the method includes: receiving, through a first account, a target message, where the target message includes a target identifier; and in a case that the first account corresponds to a first contact, outputting a first prompt message; where the target identifier is any one of the following: a contact identifier of a second contact and an identifier of a target sub-group; where the target sub-group includes the first contact, both the first contact and the second contact are contacts in a target group, and the first contact and the second contact have an association.

According to a second aspect, an embodiment of this application provides a message reminding apparatus, where the apparatus includes a receiving module and a display module. The receiving module is configured to receive, through a first account, a target message, where the target message includes a target identifier. The display module is configured to, in a case that the first account corresponds to a first contact, output a first prompt message. The target identifier is any one of the following: a contact identifier of a second contact and an identifier of a target sub-group; where the target sub-group includes the first contact, both the first contact and the second contact are contacts in a target group, and the first contact and the second contact have an association.

According to a third aspect, an embodiment of this application provides an electronic device, where the electronic device includes a processor, a memory, and a program or instructions stored in the memory and executable on the processor, and when the program or instructions are executed by the processor, the steps of the method according to the first aspect are implemented.

According to a fourth aspect, an embodiment of this application provides a readable storage medium, where the readable storage medium stores a program or instructions, and when the program or instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to execute a program or instructions to implement the method according to the first aspect.

In the embodiments of this application, in a case that the electronic device receives a target message that contains the identifier of the target sub-group or the contact identifier of the second contact through the first account and that the first account corresponds to a first contact, a first prompt message is output. In a case that the electronic device receives a target message in the target group through the first account and the target message contains the identifier of the target sub-group or the contact identifier of the second contact, the electronic device can, in a case that the first account corresponds to the first contact, display the first prompt message for prompting the first contact to view the target message in the session interface of the target group, so that when another contact sends a message in the session interface of the target group and prompts the target sub-group or the second contact, the electronic device can prompt the first contact to view the target message in a timely manner. Therefore, in a case that the target message contains the identifier of the target sub-group or the contact identifier of the second contact and the first contact and the second contact have an association, the first prompt message can be displayed in the session interface of the target group to prompt the first contact to view the target message in a timely manner, thereby improving the efficiency of the electronic device in reminding users to view the message.

### BRIEF DESCRIPTION OF DRAWINGS

FIG. 1 is a first schematic diagram of a message reminding method according to an embodiment of this application;
FIG. 2 is a second schematic diagram of a message reminding method according to an embodiment of this application;
FIG. 3 is a first schematic diagram of an instance of an interface of a mobile phone according to an embodiment of this application;
FIG. 4 is a second schematic diagram of an instance of an interface of a mobile phone according to an embodiment of this application;
FIG. 5 is a third schematic diagram of a message reminding method according to an embodiment of this application;
FIG. 6 is a fourth schematic diagram of a message reminding method according to an embodiment of this application;
FIG. 7 is a third schematic diagram of an instance of an interface of a mobile phone according to an embodiment of this application;
FIG. 8 is a fifth schematic diagram of a message reminding method according to an embodiment of this application;
FIG. 9 is a fourth schematic diagram of an instance of an interface of a mobile phone according to an embodiment of this application;
FIG. 10 is a sixth schematic diagram of a message reminding method according to an embodiment of this application;
FIG. 11 is a fifth schematic diagram of an instance of an interface of a mobile phone according to an embodiment of this application;
FIG. 12 is a sixth schematic diagram of an instance of an interface of a mobile phone according to an embodiment of this application;
FIG. 13 is a first schematic structural diagram of a message reminding apparatus according to an embodiment of this application;
FIG. 14 is a second schematic structural diagram of a message reminding apparatus according to an embodiment of this application;
FIG. 15 is a third schematic structural diagram of a message reminding apparatus according to an embodiment of this application;
FIG. 16 is a schematic structural diagram of an electronic device according to an embodiment of this application; and
FIG. 17 is a schematic diagram of a hardware structure of an electronic device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are used interchangeably in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

The message reminding method provided in the embodiments of this application is applied in a scenario of displaying a prompt message for an unread message, and the specific application scenario may be determined based on the actual usage requirements. This is not specifically limited in this application.

The following description takes the scenario of displaying a prompt message of a target message in a session interface of a target group as an example. In a case that the electronic device displays the session interface of the target group, the user can trigger the electronic device to establish an association among N contacts of a plurality of contacts corresponding to the target group, so that when a target message corresponding to the target group is received and the target message includes the contact identifier of one of the N contacts, all other contacts among the N contacts, other than the particular contact, can receive a prompt message in the session interface of the target group and view the target message in a timely manner.

Specifically, the user can, in a case that the electronic device displays the session interface of the target group, input contact identifiers of Contact 1, Contact 2, and Contact 3 in the plurality of contacts corresponding to the target group to trigger the electronic device to establish an association among Contact 1, Contact 2, and Contact 3, so that when Contact 4 sends a target message in the session interface of the target group and @mentions Contact 1 (or Contact 2, Contact 3), a prompt message for prompting Contact 2 and Contact 3 to view the target message can be displayed in the session interface of the target group. Thus, when Contact 4 sends a target message in the session interface of the target group and prompts only Contact 1 to view the target message in a timely manner, Contact 2 and Contact 3, which have an established association with Contact 1, can receive a prompt message which prompts Contact 2 and Contact 3 to also view the target message in a timely manner. Thereby, when sending the target message in the session interface of the target group, Contact 4 does not need to @mention Contact 1, Contact 2, and Contact 3 separately to remind these three contacts to view the target message in a timely manner. This simplifies user operation, thereby improving the efficiency of the electronic device in reminding users to view the message.

The following describes in detail the message reminding method provided in the embodiments of this application through specific embodiments and application scenarios thereof with reference to the accompanying drawings.

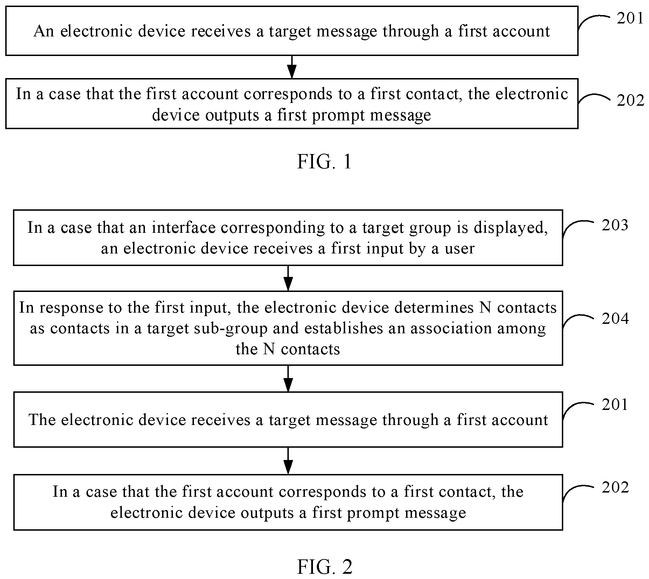

An embodiment of this application provides a message reminding method. FIG. 1 is a flowchart of a message reminding method according to an embodiment of this application. The method may be applied to an electronic device. As shown in FIG. 1, the message reminding method provided in this embodiment of this application may include the following step 201 and step 202.

Step 201: An electronic device receives a target message through a first account.

In this embodiment of this application, the foregoing target message contains a target identifier.

Step 202: In a case that the first account corresponds to a first contact, the electronic device outputs a first prompt message.

In this embodiment of this application, the foregoing target identifier is any one of the following: a contact identifier of a second contact and an identifier of a target sub-group; where the target sub-group includes the first contact, both the first contact and the second contact are contacts in a target group, and the first contact and the second contact have an association.

In this embodiment of this application, in a case that the electronic device receives a target message corresponding to the second contact in the target group and the target message contains the contact identifier of the second contact, the electronic device displays the first prompt message for prompting the first contact to view the target message in a timely manner in a session interface of the target group.

Optionally, in this embodiment of this application, in a case that the electronic device receives the target message through the first account and the target message contains the target identifier, the first prompt message is output and displayed in the session interface of the target group.

Optionally, in this embodiment of this application, the foregoing first account is an account corresponding to the target group that is logged into the electronic device.

Optionally, in this embodiment of this application, the foregoing target message is a message corresponding to the second contact in the target group, and the foregoing first prompt message is used to prompt the first contact to view the target message.

Optionally, in this embodiment of this application, the plurality of contacts included in the foregoing target sub-group may be contacts having a certain correspondence among them, for example, the plurality of contacts have a family relationship, the plurality of contacts have a friend relationship, or the plurality of contacts have a colleague relationship.

Optionally, in this embodiment of this application, the foregoing target message may be a message sent by a contact in the target group other than the plurality of contacts included in the target sub-group, and the message prompts the second contact to view the message in a timely manner (that is, the second contact is @mentioned).

Optionally, in this embodiment of this application, the first prompt message is output when the first contact receives the target message; optionally, the first prompt message is also output when the second contact or any of the plurality of contacts included in the target sub-group receives the target message; and optionally, the first prompt message is not output when any other contact receives the target message.

This embodiment of this application provides a message reminding method, in which in a case that the electronic device receives a target message that contains the identifier of the target sub-group or the contact identifier of the second contact through the first account and that the first account corresponds to the first contact, the first prompt message is output. In a case that the electronic device receives a target message in the target group through the first account and the target message contains the identifier of the target sub-group or the contact identifier of the second contact, the electronic device can, in a case that the first account corresponds to the first contact, display the first prompt message for prompting the first contact to view the target message in the session interface of the target group, so that when another contact sends a message in the session interface of the target group and prompts the target sub-group or the second contact, the electronic device can prompt the first contact to view the target message in a timely manner. Therefore, in a case that the target message contains the identifier of the target sub-group or the contact identifier of the second contact and the first contact and the second contact have an association, the first prompt message can be displayed in the session interface of the target group to prompt the first contact to view the target message in a timely manner, thereby improving the efficiency of the electronic device in reminding users to view the message.

Optionally, in this embodiment of this application, with reference to FIG. 1, as shown in FIG. 2, before step 201, the message reminding method provided in the embodiments of this application may further include the following step 203 and step 204.

Step 203: In a case that the interface corresponding to the target group is displayed, the electronic device receives a first input by a user.

In this embodiment of this application, the foregoing first input is an input by the user for contact identifiers of N contacts, and the N contacts include the first contact, N being a positive integer greater than 1.

Optionally, in this embodiment of this application, the foregoing N contacts are contacts in a plurality of contacts corresponding to the target group.

Optionally, in this embodiment of this application, the foregoing interface corresponding to the target group can be understood as a group member list interface of the target group, and the user can perform the first input for the contact identifiers of the N contacts in the group member list interface.

Optionally, in this embodiment of this application, the foregoing first input may include a plurality of sub-inputs, and in a case that the electronic device displays the session interface of the target group, the user, through the plurality of sub-inputs, first triggers the electronic device to display the group member list interface of the target group, and then performs an input for the contact identifiers of the N contacts displayed in the group member list interface.

Step 204: In response to the first input, the electronic device determines the N contacts as contacts in the target sub-group and establishes an association among the N contacts.

Optionally, in this embodiment of this application, the electronic device determines, based on the selection input (that is, the first input) by the user for the N contacts among the plurality of contacts corresponding to the target group, that an association among the N contacts needs to be established, and associates (that is, combines into a sub-group) the N contacts.

Optionally, in this embodiment of this application, the foregoing establishment of an association among the N contacts may be understood as determining the N contacts as a sub-group to bind the N contacts, such that in the target sub-group, if any one of the N contacts is @mentioned, each of the N contacts can receive a prompt message.

Optionally, it should be noted that the performer who performs the first input to trigger the electronic device to establish the association among the N contacts may be any one of the N contacts, or may be an administrator of the target group. In other words, in a case that a contact is not a contact of the N contacts, nor an administrator of the target group, the contact is unable to trigger the electronic device to establish the association among the N contacts. Additionally, a same contact can be combined into a plurality of sub-groups (that is, the same contact can be repeatedly combined into a plurality of sub-groups).

Optionally, in this embodiment of this application, after establishing the association among the N contacts, in a case that a contact sends a target message in the target group (that is, a target message corresponding to the target group is received) and the target message contains a contact identifier of the second contact (that is, the target message is a message that @mentions the second contact), the electronic device held by the first contact (that is, the electronic device corresponds to the first contact) displays a first prompt message in the session interface of the target group to prompt the first contact to view the target message in a timely manner.

It should be noted that, in the target group, in a case that a contact sends a message and @mentions another contact (for example, the second contact) to prompt the another contact to view the message in a timely manner, the another contact, to avoid being unable to reply to the message in a timely manner, can establish an association between himself (that is, the second contact) and the first contact through the method described above, so that the first contact can be prompted to view the message in a timely manner and reply to the message.

In a specific implementation, for example, in a group of a kindergarten class in which both fathers and mothers of students are in the group, such a scenario may occur in daily group communication: the teacher may @mention a parent of a student, and if the parent does not notice the message in a timely manner, usually, the other parent is also not able to notice the message in a timely manner; or, when the teacher is collecting relevant information, one parent of the student has already replied, and it is not easy for the other parent to notice whether there is a reply and therefore the other parent replies again. Therefore, in the foregoing embodiment, an association can be established between the two parents of the student, so that the two parents can follow the messages of each other and view the messages in a timely manner.

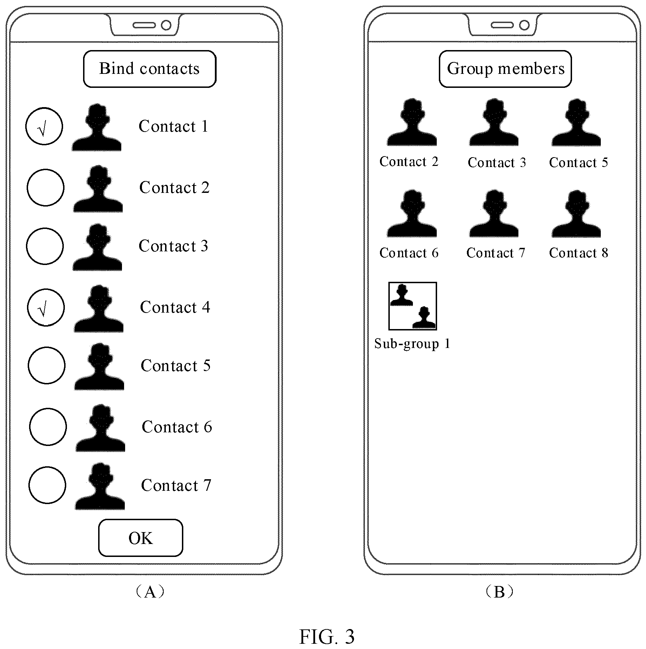

The following description uses an example in which the electronic device is a mobile phone. As shown in (A) of FIG. 3, in a case that the group member list interface of the target group is displayed, the user may perform a selection input for Contact 1 and Contact 4 displayed in the group member list interface to trigger the mobile phone to establish an association between Contact 1 and Contact 4 (that is, combine Contact 1 and Contact 4 into a sub-group 1). As shown in (B) of FIG. 3, in the group member list interface, Contact 1 and Contact 4 are displayed as a sub-group 1. A default sub-group name is displayed on the phone, and the user can rename the sub-group.

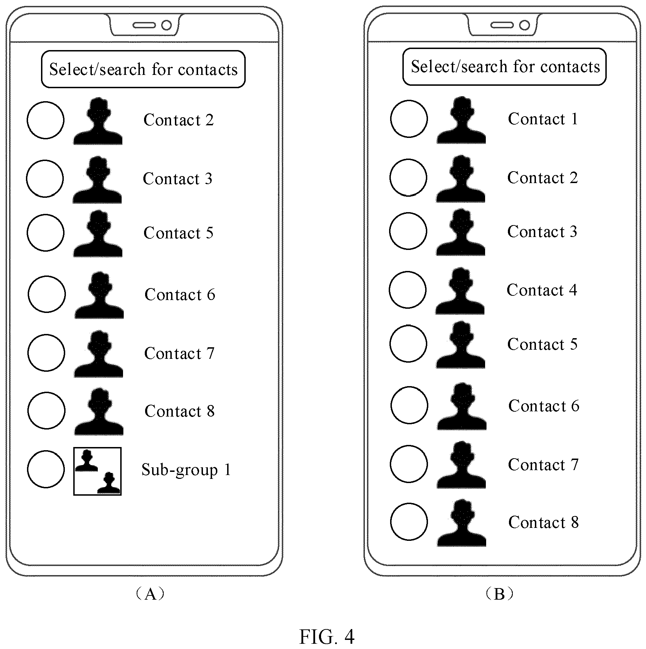

For another example, with reference to (B) of FIG. 3, as shown in (A) of FIG. 4 and (B) of FIG. 4, when a contact sends a message and selects a contact to be reminded, the mobile phone can display the contacts in two display formats as shown in the figure. With reference to (A) of FIG. 4, the mobile phone can indicate Contact 1 and Contact 4 by displaying the identifier of sub-group 1. In this case, the user can view the association between Contact 1 and Contact 4. With reference to (B) of FIG. 4, the mobile phone can display identifiers of Contact 1 and Contact 4 normally (that is, the identifiers of Contact 1 and Contact 4 are separately and individually displayed). In this case, the user is unable to view the association between Contact 1 and Contact 4, and only the processor inside the mobile phone can determine the association between Contact 1 and Contact 4.

In this embodiment of this application, in a case that the electronic device receives a target message corresponding to the second contact in the target group and the target message contains the identifier of the target sub-group or the contact identifier of the second contact in the target sub-group, a first prompt message for prompting the first contact to view the target message in a timely manner is output in the session interface of the target group. In a case that the electronic device receives a target message corresponding to the second contact in the target group and the target message contains the identifier of the target sub-group or the contact identifier of the second contact, the electronic device can display the first prompt message for prompting the first contact to view the target message in the session interface of the target group, so that when another contact sends a message in the session interface of the target group and prompts the second contact, the electronic device can prompt the first contact to view the target message corresponding to the second contact in a timely manner. Therefore, in a case that the target message contains the contact identifier of the second contact and an association is established among the N contacts through the target sub-group, the first prompt message is displayed in the session interface of the target group, so as to prompt other contacts in the N contacts to view the target message in a timely manner, thereby improving the efficiency of the electronic device in reminding users to view the message.

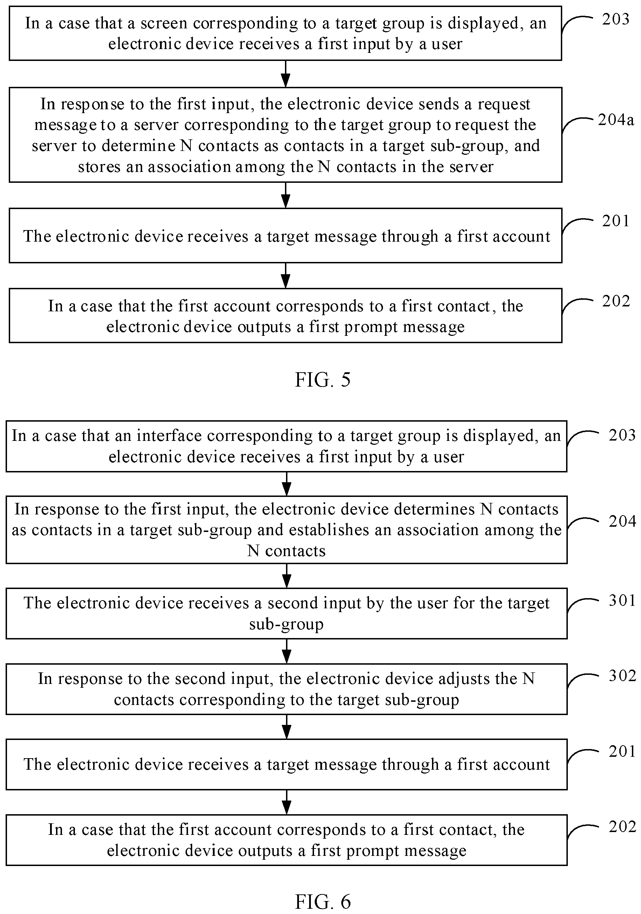

Optionally, in this embodiment of this application, with reference to FIG. 2, as shown in FIG. 5, the foregoing step 204 may be specifically implemented through the following step 204a.

Step 204a: In response to the first input, the electronic device sends a request message to a server corresponding to the target group to request the server to determine the N contacts as contacts in the target sub-group, and stores the association among the N contacts in the server.

In this embodiment of this application, in a case that the target message contains a contact identifier of at least one of the N contacts, the first prompt message is displayed in a session interface of the target group corresponding to each of the N contacts.

Optionally, in this embodiment of this application, the electronic device may, by sending a request message to the server corresponding to the target group, trigger the server to determine the N contacts as a target sub-group, so that all of the plurality of contacts corresponding to the target group can view the association among the N contacts in the interface (that is, the plurality of contacts corresponding to the target group can all view the interface as shown in (A) of FIG. 4).

Optionally, in this embodiment of this application, the electronic device (the electronic device corresponding to the first contact) may, only on this device, determine the N contacts as a target sub-group, store the association among the N contacts, as well as send the association among the N contacts to the contacts other than the first contact among the N contacts so that each of the contacts among the N contacts can determine the association among the N contacts, while other contacts in the plurality of contacts corresponding to the target group (that is, contacts other than the N contacts) do not need to determine the association among the N contacts (that is, the other contacts can view the interface as shown in (B) of FIG. 4).

It should be noted that when a contact views the interface as shown in (B) of FIG. 4 and @mentions any one of the N contacts (that is, @mentions Contact 1 or Contact 4 in sub-group 1), the first prompt message can be displayed in the session interface of the target group corresponding to both Contact 1 and Contact 4.

In this embodiment of this application, the electronic device, by sending a request message to the server corresponding to the target group, requests the server to determine the N contacts as a target sub-group and stores the association among the N contacts in the server, so that in a case that the target message contains the contact identifier of at least one among the N contacts, the first prompt message can be displayed in the session interface of the target group corresponding to each of the N contacts. Thus, the efficiency of the electronic device in reminding a plurality of users to view the message is improved by establishing an association among the N contacts.

Optionally, in this embodiment of this application, with reference to FIG. 2, as shown in FIG. 6, after step 204, the message reminding method provided in the embodiments of this application may further include the following step 301 and step 302.

Step 301: An electronic device receives a second input by the user for the target sub-group.

Optionally, in this embodiment of this application, after determining the N contacts as a target sub-group and storing the association among the N contacts, the first contact among the N contacts (that is, the user who establishes the association among the N contacts) can edit and set the target sub-group.

Step 302: In response to the second input, the electronic device adjusts the N contacts corresponding to the target sub-group.

Optionally, in this embodiment of this application, the first contact can edit the target sub-group in the group member list interface to trigger the electronic device to perform at least one of the following: adding a new contact in the target sub-group, deleting a contact in the target sub-group, dissolving the target sub-group, quitting the target sub-group, transferring the ownership of the target sub-group (that is, transferring the editing privileges of the target sub-group to another contact in the target sub-group), and the like.

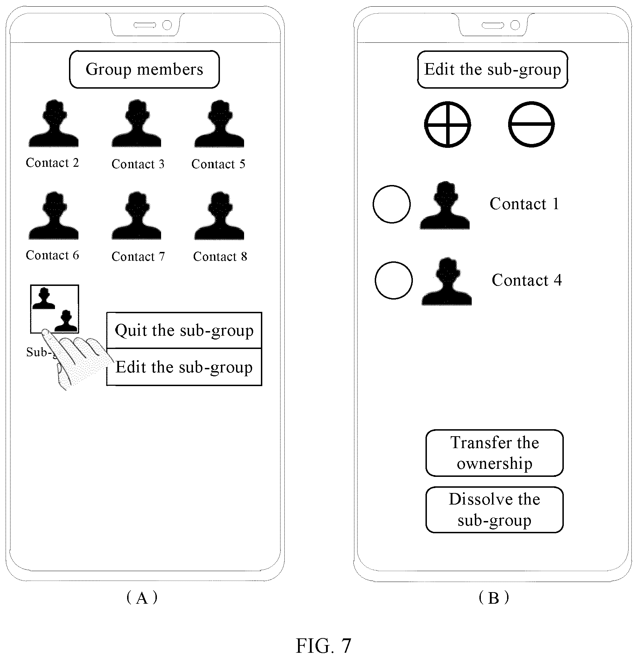

For example, with reference to (B) of FIG. 3, as shown in (A) of FIG. 7, the user performs an input for sub-group 1 that includes Contact 1 and Contact 4 in the group member list interface to trigger the mobile phone to display a "Quit the sub-group" control and an "Edit the sub-group" control. By making an input for the "Quit the sub-group" control, the user can quit the sub-group directly. In a case that the user is the owner of the sub-group, the user needs to transfer the ownership of the sub-group before quitting the sub-group; when the user performs an input for the "Edit the sub-group" control, as shown in (B) of FIG. 7, the mobile phone displays a sub-group editing interface. The sub-group editing interface includes controls for adding a new contact (that is, the plus control), deleting a contact (that is, the minus control), transferring the ownership, and dissolving the sub-group.

It should be noted that, in a case that a user is not the owner of the sub-group, when the user performs an input for sub-group 1 that includes Contact 1 and Contact 4 in the group member list interface, the mobile phone only displays the "Quit sub-group" control and does not need to display the "Edit sub-group" control.

In this embodiment of this application, after determining N contacts as a target sub-group, the user can perform an input for the target sub-group in the group member list interface to trigger the electronic device to edit the target sub-group and adjust the quantity of the N contacts corresponding to the target sub-group. This allows for flexible adjustment of the contacts included in the target sub-group, improving the flexibility of the electronic device in reminding a plurality of users to view the message.

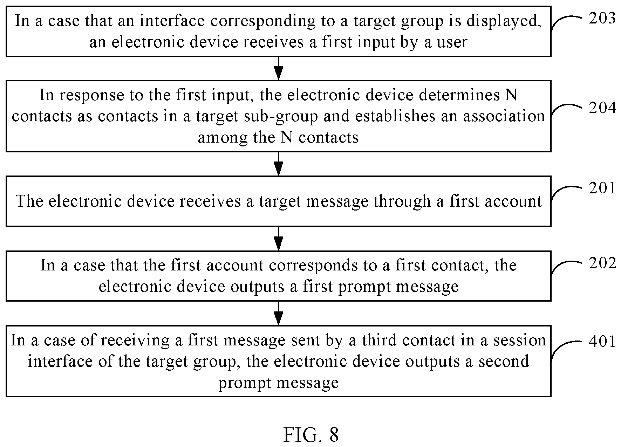

Optionally, in this embodiment of this application, with reference to FIG. 2, as shown in FIG. 8, after step 202, the message reminding method provided in the embodiments of this application may further include the following step 401.

Step 401: In a case of receiving a first message sent by a third contact in a session interface of the target group, the electronic device outputs a second prompt message.

In this embodiment of this application, the second prompt message is used to prompt the first contact to view the first message; where the first message is a reply message from the third contact to the target message, and the third contact is a contact in the target sub-group.

Optionally, in this embodiment of this application, in a case that the electronic device receives a target message corresponding to the target group and the target message contains a contact identifier of at least one among the N contacts, when one of the N contacts (that is, the third contact) sends the first message in the session interface of the target group, the second prompt message is displayed in the session interface of the target group to prompt the other contacts among the N contacts to view the first message.

Optionally, in this embodiment of this application, the above target message containing a contact identifier of at least one among the N contacts may be understood as that the target message contains an identifier of the target sub-group, or the target message contains an identifier of any one of the N contacts.

Optionally, in this embodiment of this application, in a case that the electronic device receives the target message corresponding to the target group and the target message contains a contact identifier of at least one of the N contacts, the first prompt message can be displayed in a session interface of the target group corresponding to each of the N contacts.

Optionally, in this embodiment of this application, in a case that the third contact among the N contacts views the target message and sends a reply message (that is, the first message) in the session interface of the target group, the second prompt message can be displayed in the session interface of the target group corresponding to each of the N contacts to prompt each contact among the N contacts that a contact has replied to the target message.

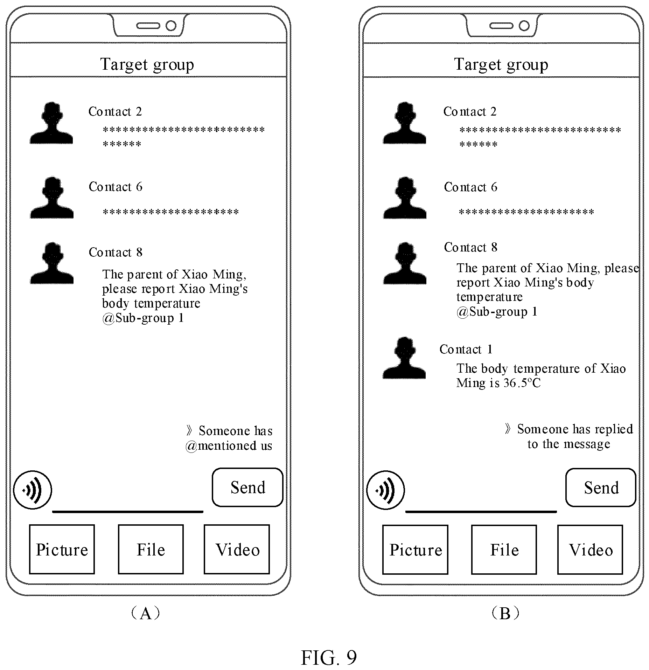

For example, as shown in (A) of FIG. 9, in a case that a contact sends a target message in the session interface of the target group and @mentions sub-group 1 (or @mentions Contact 1 or Contact 4 in sub-group 1), a prompt message "Someone has @mentioned us" can be displayed in the session interface of the target group corresponding to each of Contact 1 and Contact 4. By making an input for the prompt message, a user can trigger the mobile phone to jump to the display position where the target message is located (or to highlight the target message). As shown in (B) of FIG. 9, when Contact 1 (or Contact 4) replies to the target message in the session interface of the target group, a prompt message "Someone has replied to the message" can be displayed in the session interface of the target group corresponding to Contact 4 (or Contact 1), so that Contact 4 does not need to reply repeatedly.

In this embodiment of this application, in a case that the electronic device receives a target message corresponding to the target group and the target message contains a contact identifier of at least one of the N contacts, when one of the N contacts replies to the target message in the session interface of the target group, the electronic device can display the second prompt message in the session interface of the target group corresponding to each of the other contacts among the N contacts to prompt the contacts that a contact has already replied to the target message, so as to avoid repeated replies from a plurality of users.

Optionally, in this embodiment of this application, after step 202, the message reminding method provided in the embodiments of this application may further include the following step 402.

Step 402: In a case that the electronic device receives a second message sent by a second contact in a session interface of the target group, output second prompt information.

In this embodiment of this application, the second message is a reply message from the second contact to the target message.

Optionally, in this embodiment of this application, in a case that the electronic device receives the target message through the first account and the second contact sends a reply message (that is, the second message) to the target message in the session interface of the target group, the second prompt information can be output and displayed in the first account (that is, the first contact) to prompt the first contact that the second contact has replied to the target message in the session interface of the target group.

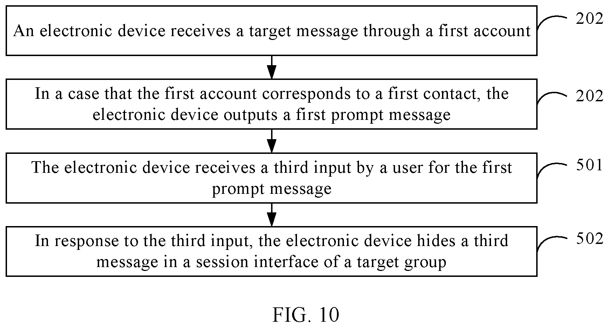

Optionally, in this embodiment of this application, with reference to FIG. 1, as shown in FIG. 10, after step 202, the message reminding method provided in the embodiments of this application may further include the following step 501 and step 502.

Step 501: The electronic device receives a third input by the user for the first prompt message.

Optionally, in this embodiment of this application, in a case that one of the N contacts receives a target message corresponding to the target group and the first prompt message is displayed in the session interface of the target group, the contact can perform an input for the displayed prompt message to trigger the electronic device to display only the target message in the session interface of the target group and hide the display of irrelevant messages.

Step 502: In response to the third input, the electronic device hides a third message in a session interface of the target group.

In this embodiment of this application, the third message is a message other than the target message in the session interface of the target group.

Optionally, in this embodiment of this application, the electronic device can display only the target message in the session interface of the target group according to the input of the user for the first prompt message, so as to avoid being interfered with by other messages in the process of viewing the message.

In this embodiment of this application, in a case that the electronic device receives a target message corresponding to the target group and receives a first prompt message, the user may perform an input for the first prompt message to make the electronic device control the session interface of the target group to display only the target message, so that in the session interface of the target group, a third message other than the target message is in a hiding state, facilitating the user to view the target message.

Optionally, in this embodiment of this application, the foregoing step 203 may be specifically implemented through the following step 203b.

Step 203b: In response to the first input, the electronic device associates each of the N - 1 contacts with the first contact separately.

In this embodiment of this application, the foregoing N - 1 contacts are contacts other than the first contact among the N contacts; where in a case that a target message corresponding to the target group is received and a third contact among the N - 1 contacts is tagged, both the third contact and the first contact can receive the first prompt message.

Optionally, in this embodiment of this application, the first contact can associate a plurality of contacts with himself (that is, the first contact) separately through the first input so that the first contact can view the messages corresponding to the associated contacts in a timely manner.

It should be noted that associating each of the N - 1 contacts separately with the first contact can be understood as treating each of the N - 1 contacts as a followed object of the first contact, so that the first contact can follow the messages of the N - 1 contacts in a timely manner.

Optionally, in this embodiment of this application, after each of the N - 1 contacts is separately associated with the first contact, when a contact sends a message in the session interface of the target group and @mentions any one of the N - 1 contacts, a prompt message can be displayed in the session interface of the target group corresponding to the first contact to prompt the first contact that an associated contact has received a new message.

Optionally, in this embodiment of this application, after each of the N - 1 contacts is separately associated with the first contact, when any one of the N - 1 contacts sends a message in the session interface of the target group, a prompt message can be displayed in the session interface of the target group corresponding to the first contact to prompt the first contact that an associated contact has sent a new message.

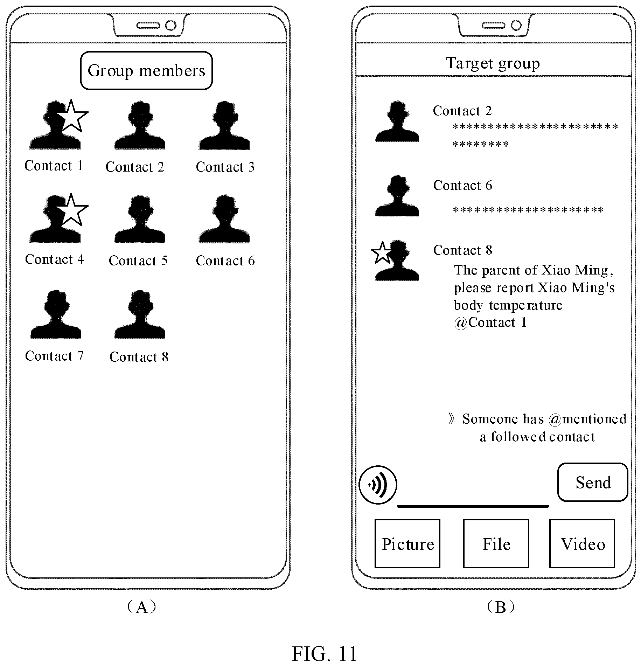

For example, with reference to (A) of FIG. 3, as shown in (A) of FIG. 11, in a case that the mobile phone displays the group member list interface of the target group, by performing a selection input for Contact 1 and Contact 4, the user associates Contact 1 and Contact 4 with the user himself (that is, Contact 1 and Contact 4 are made as the followed objects of the user), and marks the display by a star. As shown in (B) of FIG. 11, when a contact (for example, Contact 8) sends a message and @mentions Contact 1 (or @mentions Contact 4) in the session interface of the target group, a prompt message "Someone has @mentioned a followed contact" can be displayed in the session interface of the target group corresponding to the first contact.

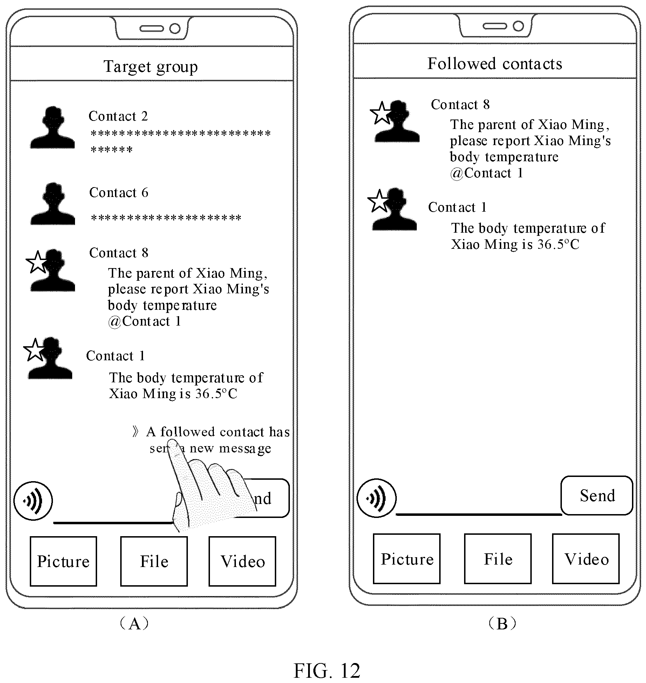

For another example, with reference to (B) of FIG. 11, as shown in (A) of FIG. 12, when Contact 1 replies to the target message in the session interface of the target group, a prompt message "A followed contact has sent a new message" can be displayed in the session interface of the target group corresponding to the first contact, so that the first contact can perform an input for the prompt message. As shown in (B) of FIG. 12, the mobile phone can display only the messages containing @Contact 1 and messages sent by Contact 1 in the session interface of the target group, so that the first contact can conveniently view the messages corresponding to a followed contact.

Optionally, in this embodiment of this application, the user may adjust the associated contacts in the group member list interface of the target group to add or remove an associated contact.

In this embodiment of this application, the user can associate each of the N - 1 contacts with the first contact separately through the first input, so that the N - 1 contacts are treated as the followed contacts of the first contact. Thus, in a case that the first contact receives a target message and tags a contact in the N - 1 contacts, the first contact can receive the first prompt message so that the first contact can view the target message in a timely manner. Therefore, the efficiency of the electronic device in reminding the user to view the message can be improved.

It should be noted that the message reminding method provided in this embodiment of this application may be performed by a message reminding apparatus or a control module for performing the message reminding method in the message reminding apparatus. In this embodiment of this application, the message reminding apparatus provided in the embodiments of this application is described by using the message reminding method being performed by the message reminding apparatus as an example.

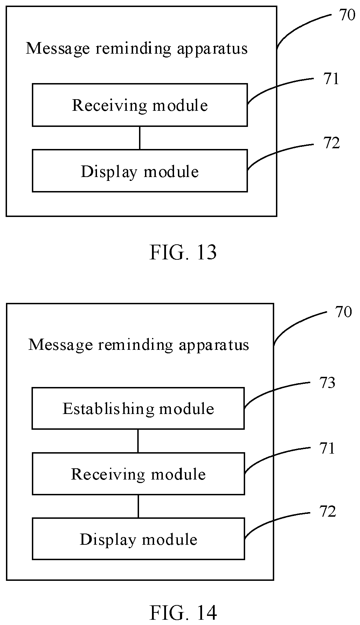

FIG. 13 is a possible schematic structural diagram of a message reminding apparatus according to an embodiment of this application. As shown in FIG. 13, the message reminding apparatus 70 includes a receiving module 71 and a display module 72.

The receiving module 71 is configured to receive, through a first account, a target message, where the target message includes a target identifier. The display module 72 is configured to, in a case that the first account corresponds to a first contact, output a first prompt message. the target identifier is any one of the following: a contact identifier of a second contact and an identifier of a target sub-group; where the target sub-group includes the first contact, both the first contact and the second contact are contacts in a target group, and the first contact and the second contact have an association.

In a possible implementation, the receiving module 71 is further configured to, before the receiving, through a first account, a target message, receive a first input by a user in a case that an interface corresponding to the target group is displayed, where the first input is an input by the user for contact identifiers of N contacts, the N contacts including the first contact and N being a positive integer greater than 1. With reference to FIG. 13, as shown in FIG. 14, the message reminding apparatus 70 provided in the embodiments of this application further includes an establishing module 73. The establishing module 73 is configured to, in response to the first input received by the receiving module 71, determine the N contacts as contacts in the target sub-group and establish an association among the N contacts.

In one possible implementation, the establishing module 73 is specifically configured to: send a request message to a server corresponding to the target group to request the server to determine the N contacts as contacts in the target sub-group, and store the association among the N contacts in the server. In a case that the target message contains a contact identifier of at least one of the N contacts, the first prompt message is displayed in a session interface of the target group corresponding to each of the N contacts.

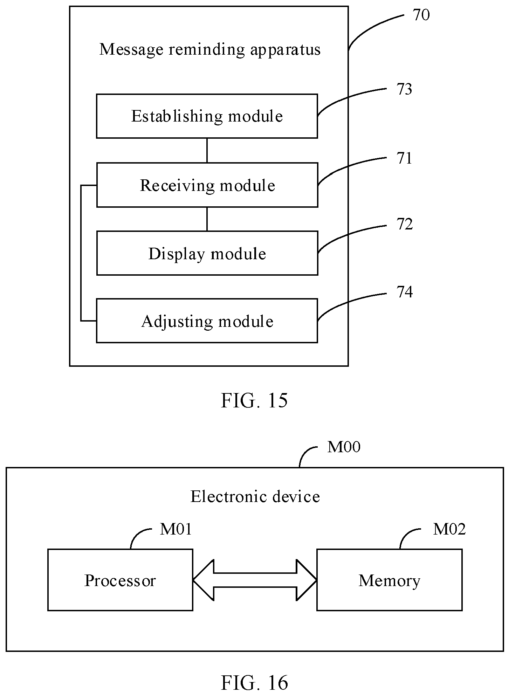

In one possible implementation, the receiving module 71 is further configured to, after the establishing module 73 determines the N contacts as contacts in the target sub-group and establishes the association among the N contacts, receive a second input by the user for the target sub-group. With reference to FIG. 14, as shown in FIG. 15, the message reminding apparatus 70 provided in the embodiments of this application further includes an adjusting module 74. The adjusting module 74 is configured to, in response to the second input received by the receiving module 71, adjust the N contacts corresponding to the target sub-group.

In one possible implementation, the display module 72 is further configured to, after the display module 72 outputs the first prompt message, in a case that a first message sent by a third contact in a session interface of the target group is received, output a second prompt message, the second prompt message being used to prompt the first contact to view the first message; where the first message is a reply message from the third contact to the target message, and the third contact is a contact in the target sub-group.

In one possible implementation, the display module 72 is further configured to, after the first prompt message is output, in a case that a second message sent by the second contact in a session interface of the target group is received, output second prompt information; where the second message is a reply message from the second contact to the target message.

In one possible implementation, the receiving module 71 is further configured to, after the display module 72 outputs the first prompt message, receive a third input by a user for the first prompt message. The display module 72 is further configured to, in response to the third input received by the receiving module 71, hide a third message in a session interface of the target group. The third message is a message other than the target message in the session interface of the target group.

The message reminding apparatus provided in this embodiment of this application is capable of implementing the processes that are implemented by the message reminding apparatus in the foregoing method embodiments. To avoid repetition, details are not described herein again.

This embodiment of this application provides a message reminding apparatus. In a case that the electronic device receives a target message in the target group through the first account and the target message contains the identifier of the target sub-group or the contact identifier of the second contact, the electronic device can, in a case that the first account corresponds to the first contact, display the first prompt message for prompting the first contact to view the target message in the session interface of the target group, so that when another contact sends a message in the session interface of the target group and prompts the target sub-group or the second contact, the electronic device can prompt the first contact to view the target message in a timely manner. Therefore, in a case that the target message contains the identifier of the target sub-group or the contact identifier of the second contact and the first contact and the second contact have an association, the first prompt message can be displayed in the session interface of the target group to prompt the first contact to view the target message in a timely manner, thereby improving the efficiency of the electronic device in reminding users to view the message.

The message reminding apparatus in this embodiment of this application may be an apparatus or a component, integrated circuit, or chip in a terminal. The apparatus may be a mobile electronic device or a non-mobile electronic device. For example, the mobile electronic device may be a mobile phone, a tablet computer, a notebook computer, a palmtop computer, a vehicle-mounted electronic device, a wearable device, an ultra-mobile personal computer (ultra-mobile personal computer, UMPC), a netbook, or a personal digital assistant (personal digital assistant, PDA), and the non-mobile electronic device may be a network attached storage (Network Attached Storage, NAS), a personal computer (personal computer, PC), a television (television, TV), a teller machine, a self-service machine, or the like. This is not specifically limited in the embodiments of this application.

The message reminding apparatus in this embodiment of this application may be an apparatus having an operating system. The operating system may be an Android (Android) operating system, may be an iOS operating system, or may be another possible operating system. This is not specifically limited in this embodiment of this application.

Optionally, as shown in FIG. 16, an embodiment of this application further provides an electronic device M00, including a processor M01, a memory M02, and a program or instructions stored in the memory M02 and executable on the processor M01, where when the program or instructions are executed by the processor M01, the processes of the foregoing message reminding method embodiment are implemented, with the same technical effects achieved. To avoid repetition, details are not further described herein.

It should be noted that the electronic device in this embodiment of this application includes the above-mentioned mobile electronic device and non-mobile electronic device.

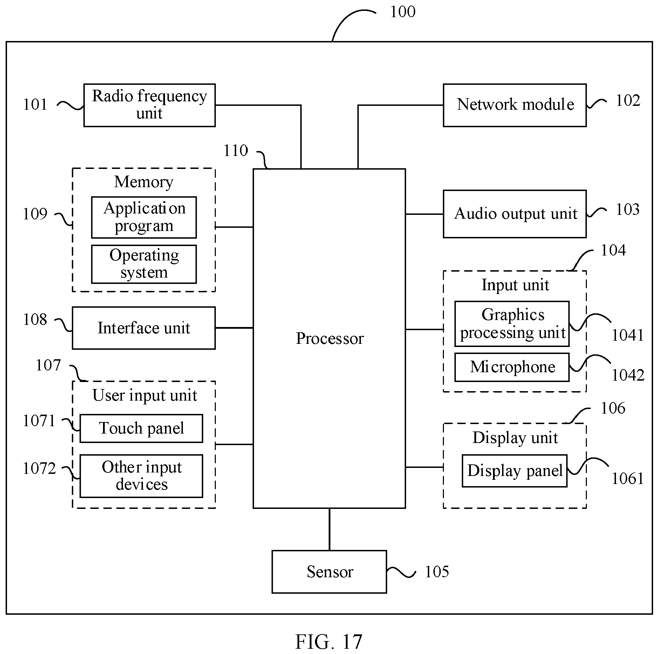

FIG. 17 is a schematic diagram of a hardware structure of an electronic device according to an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

Those skilled in the art can understand that the electronic device 100 may further include a power supply (for example, a battery) that supplies power to various components. The power supply may be logically connected to the processor 110 through a power management system, so that functions such as charge and discharge management and power consumption management are implemented by using the power management system. The structure of the electronic device shown in FIG. 17 does not constitute a limitation of the electronic device. The electronic device may include more or fewer components than those shown in the figure, or some components may be combined, or there may be a different component layout. Details are not described herein again.

The network module 102 is configured to receive, through a first account, a target message, where the target message includes a target identifier.

The display unit 106 is configured to, in a case that the first account corresponds to a first contact, output a first prompt message. the target identifier is any one of the following: a contact identifier of a second contact and an identifier of a target sub-group; where the target sub-group includes the first contact, both the first contact and the second contact are contacts in a target group, and the first contact and the second contact have an association.

Optionally, the user input unit 107 is configured to, in a case that a session interface of the target group is displayed, receive a first input by a user, where the first input is an input by the user for contact identifiers of N contacts, and the N contacts include the first contact, N being a positive integer greater than 1.

The processor 110 is configured to, in response to the first input, determine the N contacts as contacts in the target sub-group and establish an association among the N contacts.

This embodiment of this application provides an electronic device. In a case that the electronic device receives a target message in the target group through the first account and the target message contains the identifier of the target sub-group or the contact identifier of the second contact, the electronic device can, in a case that the first account corresponds to the first contact, display the first prompt message for prompting the first contact to view the target message in the session interface of the target group, so that when another contact sends a message in the session interface of the target group and prompts the target sub-group or the second contact, the electronic device can prompt the first contact to view the target message in a timely manner. Therefore, in a case that the target message contains the identifier of the target sub-group or the contact identifier of the second contact and the first contact and the second contact have an association, the first prompt message can be displayed in the session interface of the target group to prompt the first contact to view the target message in a timely manner, thereby improving the efficiency of the electronic device in reminding users to view the message.

The processor 110 is specifically configured to control the network module 102 to send a request message to the server corresponding to the target group, requesting the server to determine the N contacts as contacts in a target sub-group, and store the association among the N contacts in the server; where, in a case that the target message contains the contact identifier of at least one among the N contacts, the first prompt message is displayed in the session interface of the target group corresponding to each of the N contacts.

In this embodiment of this application, the electronic device, by sending a request message to the server corresponding to the target group, requests the server to determine the N contacts as a target sub-group and stores the association among the N contacts in the server, so that in a case that the target message contains the contact identifier of at least one among the N contacts, the first prompt message can be displayed in the session interface of the target group corresponding to each of the N contacts. Thus, the efficiency of the electronic device in reminding a plurality of users to view the message is improved by establishing an association among the N contacts.

The user input unit 107 is further configured to receive a second input by a user for the target sub-group.

The processor 110 is further configured to, in response to the second input, adjust the N contacts corresponding to the target sub-group.

In this embodiment of this application, after determining N contacts as a target sub-group, the user can perform an input for the target sub-group in the group member list interface to trigger the electronic device to edit the target sub-group and adjust the quantity of the N contacts corresponding to the target sub-group. This allows for flexible adjustment of the contacts included in the target sub-group, improving the flexibility of the electronic device in reminding a plurality of users to view the message.

The display unit 106 is configured to, in a case that a first message sent by a third contact in a session interface of the target group is received, output a second prompt message, the second prompt message being used to prompt the first contact to view the first message; where the first message is a reply message from the third contact to the target message, and the third contact is a contact in the target sub-group.

In this embodiment of this application, in a case that the electronic device receives a target message corresponding to the target group and the target message contains a contact identifier of at least one of the N contacts, when one of the N contacts replies to the target message in the session interface of the target group, the electronic device can display the second prompt message in the session interface of the target group corresponding to each of the other contacts among the N contacts to prompt the contacts that a contact has already replied to the target message, so as to avoid repeated replies from a plurality of users.

The display unit 106 is further configured to, in a case that a second message sent by the second contact in a session interface of the target group is received, output second prompt information; where the second message is a reply message from the second contact to the target message.

The user input unit 107 is further configured to receive a third input by a user for the first prompt message.

The processor 110, in response to the third input, hides a third message in a session interface of the target group. The third message is a message other than the target message in the session interface of the target group.

In this embodiment of this application, in a case that the electronic device receives a target message corresponding to the target group and receives a first prompt message, the user may perform an input for the first prompt message to make the electronic device control the session interface of the target group to display only the target message, so that in the session interface of the target group, a second message other than the target message is in a hiding state, facilitating the user to view the target message.

It should be understood that in this embodiment of this application, the input unit 104 may include a graphics processing unit (Graphics Processing Unit, GPU) 1041 and a microphone 1042. The graphics processing unit 1041 processes image data of a static picture or a video that is obtained by an image capture apparatus (for example, a camera) in a video capture mode or an image capture mode. The display unit 106 may include a display panel 1061. The display panel 1061 may be configured in a form of a liquid crystal display, an organic light-emitting diode display, or the like. The user input unit 107 includes a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a functional button (such as a volume control button or a power on/off button), a trackball, a mouse, and a joystick. Details are not described herein. The memory 109 may be configured to store software programs and various data which include but are not limited to an application program and an operating system. The processor 110 may integrate an application processor and a modem processor. The application processor mainly processes an operating system, a user interface, an application program, and the like. The modem processor mainly processes wireless communication. It can be understood that the modem processor may alternatively be not integrated in the processor 110.

An embodiment of this application further provides a readable storage medium, where the readable storage medium stores a program or instructions, and when the program or instructions are executed by a processor, the processes of the foregoing message reminding method embodiments are implemented, with the same technical effects achieved. To avoid repetition, details are not described herein again.

The processor is a processor in the electronic device in the foregoing embodiments. The readable storage medium includes a computer-readable storage medium such as a computer read-only memory (Read-Only Memory, ROM), a random access memory (Random Access Memory, RAM), a magnetic disk, or an optical disc.

Another embodiment of this application provides a chip, where the chip includes a processor and a communication interface, the communication interface is coupled to the processor, and the processor is configured to execute a program or instructions to implement the processes of the foregoing message reminding method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A message reminding method, wherein the method comprises:
receiving, through a first account, a target message, wherein the target message comprises a target identifier; and
in a case that the first account corresponds to a first contact, outputting a first prompt message; wherein
the target identifier is any one of the following: a contact identifier of a second contact and an identifier of a target sub-group; wherein the target sub-group comprises the first contact, both the first contact and the second contact are contacts in a target group, and the first contact and the second contact have an association.

2. The method according to claim 1, wherein before the receiving, through a first account, a target message, the method further comprises:
in a case that an interface corresponding to the target group is displayed, receiving a first input by a user, wherein the first input is an input by the user for contact identifiers of N contacts, and the N contacts comprise the first contact, N being a positive integer greater than 1; and
in response to the first input, determining the N contacts as contacts in the target sub-group and establishing an association among the N contacts.

3. The method according to claim 2, wherein the determining the N contacts as contacts in the target sub-group and establishing an association among the N contacts comprises:
sending a request message to a server corresponding to the target group to request the server to determine the N contacts as contacts in the target sub-group, and storing the association among the N contacts in the server; wherein
in a case that the target message contains a contact identifier of at least one of the N contacts, the first prompt message is displayed in a session interface of the target group corresponding to each of the N contacts.

4. The method according to claim 2, wherein after the determining the N contacts as contacts in the target sub-group and establishing an association among the N contacts, the method further comprises:
receiving a second input by the user for the target sub-group; and
in response to the second input, adjusting the N contacts corresponding to the target sub-group.

5. The method according to claim 2, wherein after the outputting a first prompt message, the method further comprises:
in a case that a first message sent by a third contact in a session interface of the target group is received, outputting a second prompt message, the second prompt message being used to prompt the first contact to view the first message; wherein the first message is a reply message from the third contact to the target message, and the third contact is a contact in the target sub-group.

6. The method according to claim 1, wherein after the outputting a first prompt message, the method further comprises:
in a case that a second message sent by the second contact in a session interface of the target group is received, outputting second prompt information; wherein
the second message is a reply message from the second contact to the target message.

7. The method according to claim 1, wherein after the outputting a first prompt message, the method further comprises:
receiving a third input by a user for the first prompt message; and
in response to the third input, hiding a third message in a session interface of the target group; wherein
the third message is a message other than the target message in the session interface of the target group.

8. A message reminding apparatus, wherein the message reminding apparatus comprises a receiving module and a display module; wherein
the receiving module is configured to receive, through a first account, a target message, wherein the target message comprises a target identifier; and
the display module is configured to, in a case that the first account corresponds to a first contact, output a first prompt message; wherein
the target identifier is any one of the following: a contact identifier of a second contact and an identifier of a target sub-group; wherein the target sub-group comprises the first contact, both the first contact and the second contact are contacts in a target group, and the first contact and the second contact have an association.

9. The apparatus according to claim 1, wherein the message reminding apparatus further comprises an establishing module; wherein
the receiving module is further configured to, before the receiving, through a first account, a target message, receive a first input by a user in a case that an interface corresponding to the target group is displayed, wherein the first input is an input by the user for contact identifiers of N contacts, and the N contacts comprise the first contact, N being a positive integer greater than 1; and
the establishing module is configured to, in response to the first input received by the receiving module, determine the N contacts as contacts in the target sub-group and establish an association among the N contacts.

10. The apparatus according to claim 9, wherein the establishing module is specifically configured to: send a request message to a server corresponding to the target group to request the server to determine the N contacts as contacts in the target sub-group, and store the association among the N contacts in the server; wherein
in a case that the target message contains a contact identifier of at least one of the N contacts, the first prompt message is displayed in a session interface of the target group corresponding to each of the N contacts.

11. The apparatus according to claim 9, wherein the message reminding apparatus further comprises an adjusting module; wherein
the receiving module is further configured to, after the establishing module determines the N contacts as contacts in the target sub-group and establishes the association among the N contacts, receive a second input by the user for the target sub-group; and
the adjusting module is configured to, in response to the second input received by the receiving module, adjust the N contacts corresponding to the target sub-group.

12. The apparatus according to claim 9, wherein the display module is further configured to, after the display module outputs the first prompt message, in a case that a first message sent by a third contact in a session interface of the target group is received, output a second prompt message, the second prompt message being used to prompt the first contact to view the first message; wherein the first message is a reply message from the third contact to the target message, and the third contact is a contact in the target sub-group.

13. The apparatus according to claim 8, wherein the display module is further configured to, after the first prompt message is output, in a case that a second message sent by the second contact in a session interface of the target group is received, output second prompt information; wherein the second message is a reply message from the second contact to the target message.

14. The apparatus according to claim 8, wherein the receiving module is further configured to, after the display module outputs the first prompt message, receive a third input by a user for the first prompt message; and
the display module is further configured to, in response to the third input received by the receiving module, hide a third message in a session interface of the target group; wherein
the third message is a message other than the target message in the session interface of the target group.

15. An electronic device, comprising a processor, a memory, and a program or instructions stored in the memory and executable on the processor, wherein when the program or instructions are executed by the processor, the steps of the message reminding method according to any one of claims 1 to 7 are implemented.

16. A readable storage medium, wherein the readable storage medium stores a program or instructions, and when the program or instructions are executed by a processor, the steps of the message reminding method according to any one of claims 1 to 7 are implemented.

17. A chip, wherein the chip comprises a processor and a communication interface, the communication interface is coupled to the processor, and the processor is configured to execute a program or instructions to implement the method according to any one of claims 1 to 7.

18. A computer program product, wherein the program product is executed by at least one processor to implement the method according to any one of claims 1 to 7.

19. A message reminding apparatus, wherein the apparatus is configured to perform the message reminding method according to any one of claims 1 to 7.
